Europäisches Patentamt

European Patent Office

Office européen des brevets

(11) Publication number: **0 347 051**

**A2**

# EUROPEAN PATENT APPLICATION

(21) Application number: **89305273.8**

(22) Date of filing: **24.05.89**

(51) Int. Cl.⁴: **H02G 3/06**

(30) Priority: **11.06.88 GB 8813869**

(43) Date of publication of application:
**20.12.89 Bulletin 89/51**

(84) Designated Contracting States:
**DE ES FR IT NL SE**

(71) Applicant: **MSP LIMITED**
**Roman Way**
**Coleshill Birmingham, B46 1HG(GB)**

(72) Inventor: **Taylor, Robert Victor**
**c/o MSP Limited Roman Way**
**Coleshill Birmingham B46 1HG(GB)**

(74) Representative: **Cowan, David Robert et al**
**WALFORD AND HARDMAN BROWN 5, The**
**Quadrant**
**Coventry CV1 2EL(GB)**

(54) **End fitting for conduit.**

(57) An end fitting for flexible conduit 10 is formed with two members, a body member 14 and a nut member 12 the body member being formed as an integral unit.

On the body member is formed a sleeve portion 16 having a helical groove 17 to engage an internal helically-wound portion of the conduit 10. The end wall of the conduit is received in an annular space formed around the sleeve portion 16 and between the sleeve portion and an externally threaded portion 20 of the body.

A sealing member 22 is located between the body member 14 and the nut member 12 to sealingly engage the outer surface of the conduit 10 and to make the connection liquid tight.

## END FITTING FOR CONDUIT

This invention relates to end fittings for conduit, in particular conduit of the kind for containing electrical wiring in a liquid tight manner. Such conduit is usually flexible having an internally arranged helical portion made of metal and a plastics coating.

End fittings have been proposed which are formed in three or more portions and the portions are connected to an end of the conduit and to each other to secure the fitting to the conduit. Further elements may be connected to the fitting to effect assembly of the conduit.

An object of the invention is to provide an improved and simplified end fitting.

According to the invention an end fitting comprises two members, a nut member and a body member, the body member being formed as an integral unit of generally tubular shape and including at one end a radially inner sleeve portion formed with a helical groove for engaging with a helical profile on the inner surface of conduit to be secured to the fitting, an annular space being formed around the sleeve portion for receiving the end wall of the conduit, an outwardly threaded portion of the body member defining the outer side of the annular space and said threaded portion being arranged to receive the nut member whereby the end of the conduit is secured to the body member, sealing means being located between the body member and the nut member to seal against the outer surface of the conduit.

Preferably the body member has at its opposite end a threaded outer surface and intermediate its ends the body member is formed with a profile for a spanner or the like whereby the body member is gripped against rotation during location of the nut member on the body.

Conveniently the sleeve portion is formed to have an internal dimension less than the minimum internal dimension of the rest of the body member. By so arranging the internal dimensions the helical groove in the sleeve portion can be readily formed in the sleeve portion by an internally-located groove forming tool inserted through the body member.

By forming the body portion as an integral unit, preferably from a single piece of metal, the end fitting is a simple and effective item with reduced possibility of leakage of liquid and economical to manufacture.

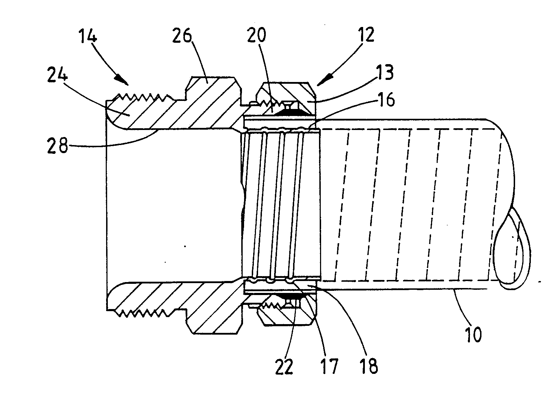

Further features of the invention will become apparent from the following description of an embodiment of the invention given by way of example only and with reference to the drawing which is a longitudinal cross-section through an end fitting.

Referring to the drawing an end fitting is shown which is for securing to the end of flexible conduit 10 primarily for housing electrical wiring in a liquid-tight manner.

The conduit 10 is formed with a helically-wound, internal metal portion around which is located a plastics coating and the conduit may be of conventional construction.

The end fitting is secured to the conduit and is in two parts, a nut member 12 and a body member 14. The nut member 12 is a hexagonal nut internally threaded and having a flanged portion 13 the internal profile of which is a close fit about the outer surface of the conduit 10.

The body member 14 is formed as an integral unit out of one piece of metal and at one end engages with the end of the conduit 10 for liquid-tight connection thereto. For this purpose a sleeve portion 16 is formed and the portion 16 has a helical groove 17 which, over the radially outer surface of the portion 16, is arranged to threadably connect with the internal helically-wound portion of the conduit 10.

The body member 14 defines around the sleeve portion 16 an annular space 18 in which the end wall of the conduit 10 is received. Around the space 18 the body member 14 provides an outwardly threaded portion 20 on which the nut member 12 is threadably engaged in use.

Located between the threaded portion 20 and the nut member 12 is located a sealing member 22 and the threaded portion 20 and the sealing member 22 are internally a close fit around the outer surface of the conduit 10. In addition the outer surface of the sealing member 22 is profiled to engage with the flanged portion 13 of the nut member 12 at one end and the end of the threaded portion 20 at the other end so that when the nut portion is tightened onto the body portion the sealing member 22 is urged into sealing contact with the outer surface of the conduit.

The body member 14 is generally tubular and coaxial with the conduit 10 in use. At its end remote from the sleeve portion 16 the member 14 is formed with an externally-threaded portion 24 and intermediate the ends of the member there is formed a hexagonal outer profile 26 whereby the member 14 can be gripped by a spanner or the like during tightening of the nut member 12 onto the body member 14. Internally of the portion 24 and the profile 26 the body member 14 has a generally cylindrical shape at 28 with a curved entry profile at the end. The internal diameter of the cylinder 28 is greater than that of the sleeve portion 16 and these differential diameters enable the helical groove 17 to be formed in the sleeve portion 16 by the entry of a groove making tool from the end of the member 14 adjacent the threaded portion 24.

The threaded portion 24 is arranged to receive another member (not shown), for example a swivel member, for connecting the end fitting to said other member.

It will be seen that the body portion of the end fitting is readily manufactured out of one piece of metal by machining of the external and internal profiles followed by the grooving operation. The resulting fitting is readily fitted to the conduit in a simple manner and effects a liquid-tight connection with the conduit.

## Claims

1. An end fitting for conduit comprising two members, a nut member (12) and a body member (14), characterised in that the body member (14) is formed as an integral unit of generally tubular shape and including, at one end, a radially inner sleeve portion (16) formed with a helical groove (17) for engaging with a helical profile on the inner surface of conduit (10) to be secured to the fitting, and in that an annular space (18) is formed around the sleeve portion (16) for receiving the end wall of the conduit (10), an outwardly threaded portion of the body member (14) defining the outer side of the annular space (18) and said threaded portion being arranged to receive the nut member (12) whereby the end of the conduit (10) is secured to the body member (14), sealing means (22) being located between the body member (14) and the nut member (12) to seal against the outer surface of the conduit (10).

2. An end fitting according to Claim 1 characterised in that the body member (14) has a threaded outer surface at its end remote from the sleeve portion (16).

3. An end fitting according to Claim 1 or 2 characterised in that the body member (14) has a portion (26) intermediate its ends formed with an outer profile for gripping the body member (14) during location of the nut member (12) on the body member.

4. An end fitting according to any one of the preceding claims characterised in that the internal dimension of the sleeve portion (16) is less than the minimum internal dimension of the rest of the body member (14).

5. An end fitting according to any one of the preceding claims characterised in that the sealing means (22) is an annular sealing member engaged between the body member (14) and the nut member (12) during use and urged inwardly towards the conduit (10) by location of the nut member on the body member.